# EUROPEAN PATENT SPECIFICATION

(11) **EP 3 642 676 B1**
(45) Date of publication and mention of the grant of the patent: **15.04.2026**
(21) Application number: 18753230.4
(22) Date of filing: 19.06.2018
(51) Int. Cl.: G05B 13/02, G05B 19/4099, G05B 23/02, B29C 64/393

(54) **CONTROL SYSTEM AND METHOD OF CONTROLLING AN ENERGY BEAM IN AN ADDITIVE MANUFACTURING APPARATUS**
STEUERSYSTEM UND VERFAHREN ZUR STEUERUNG EINES ENERGIESTRAHLS IN EINEM GERÄT FÜR DIE GENERATIVE FERTIGUNG
SYSTÈME DE COMMANDE ET PROCÉDÉ PERMETTANT DE COMMANDER UN FAISCEAU D'ÉNERGIE DANS UN APPAREIL DE FABRICATION ADDITIVE

(30) Priority: 20.06.2017 ZA 201704182
(43) Date of publication of application: 29.04.2020
(73) Proprietor: CSIR, Brummeria 0184 (ZA)
(72) Inventor: JACOBS, Cobus, 0184 Pretoria (ZA); PREUSSLER, Dieter, Rainer, 0041 Pretoria (ZA); ROUX, Filippus, Stefanus, 0081 Lynnwood Manor (ZA); ZHANG, Yingwen, Ottawa Ontario K1T 3J9 (CA); BURGER, Liesl, 0184 The Willows (ZA); RAMOKOLO, Rocky, 0184 Pretoria (ZA)
(74) Representative: Marks & Clerk LLP
(86) International application number: PCT/IB2018/054497
(87) International publication number: WO 2018/234984

(56) References cited:
- WO-A1-2016/183210
- JP-A- 2016 016 449
- US-A1- 2015 375 456

## Description

### FIELD OF THE INVENTION

This invention relates to additive manufacturing. More particularly, the invention relates to a control system for controlling an energy beam in an additive manufacturing apparatus and to a method of controlling an energy beam in an additive manufacturing apparatus. The invention also relates to an additive manufacturing apparatus.

### BACKGROUND OF THE INVENTION

Additive manufacturing (AM) refers to various processes used to synthesise a three-dimensional object (hereafter simply referred to as an "object" or "part"). Certain AM techniques are sometimes referred to as "3D printing".

In AM, parts are typically manufactured by digitally slicing a three-dimensional computer-aided design (CAD) model into two-dimensional layers or images. These layers are then manufactured by curing, consolidating, melting or otherwise forming these layers from a raw material, typically in the form of a powder or fluid. For the sake of convenience, the terms "consolidating" or simply "forming" will hereinafter be used to refer to the forming of such layers, irrespective of the specific manner in which the layers are formed.

Parts can be produced from various raw materials, such as metals, polymers, ceramics, resins and gypsum. Further, various techniques are used to consolidate layers, including lasers, electron beams, other high energy beams, binders and thermal modules.

In the Applicant's experience, AM provides a number of advantages over traditional manufacturing methods. These advantages include the ability to manufacture highly complex parts which allows for weight reduction, integration of more functionality into parts and part count reduction. The process also ensures relatively low material wastage due to the reusability of raw material, the freedom in part design and the obviation of the need for tooling.

A number of AM processes employ a laser or electron beam to consolidate material in a material bed in layers ultimately to form a desired part. Such processes will hereinafter be referred to as "powder bed fusion processes". In powder bed fusion processes, a laser is typically directed by a number of optical components to a scanning unit. The laser is then switched on and off based on the geometry of a CAD model to ensure that the desired layers are consolidated in the correct manner.

The material bed is supported on a build platform which is incrementally lowered as each new layer of the object is consolidated. A fresh layer of material is then added to the material bed before the next layer is scanned.

The energy beam travels along an optical path from its energy source (e.g. laser) ultimately to reach a surface of the material bed. This optical path may include a number of different optical components such as a collimator, a beam reducing telescope (BRT), a high-speed modulation unit or optical switch, a beam expanding telescope (BET), one or more mirrors and one or more laser windows. The energy beam then reaches the scanning unit which directs the energy beam onto the material bed.

The Inventors have found that it is important to maintain a constant power density, spot size and profile on the surface of the material bed (within certain tolerances) in an AM apparatus to ensure consistency and thereby ensure that parts of the desired quality are manufactured. To this end, it is equally important that the energy beam maintains its diameter and beam divergence (or collimation) at an entrance of the scanning unit (within specified tolerances).

Materials from which optical components are made and their anti-reflection (AR) coatings, e.g. fused silica, sapphire and other optical glasses and crystals, may absorb and/or scatter some of the radiation of the energy beam. Absorption and scattering tends to heat the optical components themselves, resulting in a phenomenon known as "thermal lensing". Thermal lensing may cause changes in focusing properties of an affected optical component, namely a focus shift and a deterioration of the beam wave front due to the onset of optical aberrations.

The Inventors have found that properties of the energy beam, such as its focused spot size, spatial profile, power density and focus location, may change significantly over time (to values outside permitted tolerances) due to thermal lensing. This is likely to have an adverse impact on the quality of manufactured parts and the degree of accuracy achievable in AM.

The Inventors are aware of techniques that have been developed to address some of the issues associated with thermal lensing when the optical elements have uniform temperatures. However, these techniques were developed for conventional laser machining applications, such as laser welding and cutting. The Inventors have found that the techniques of which they are aware are not suitable for use in the relatively high power and high temperature environments associated with AM, where the temperature of an optical element may vary both radially and axially over time.

A need thus exists for a system and method which permits the correction of or compensation for effects of thermal lensing in optical components of an AM apparatus. The Inventors believe that the present invention will address this need, at least to some extent.

### SUMMARY OF THE INVENTION

The invention is set out in the appended set of claims.

### BRIEF DESCRIPTION OF THE DRAWINGS

The invention will now be further described, by way of example, with reference to the accompanying drawings.

In the drawings:
- **FIG. 1**: is a three-dimensional partially sectional view of an exemplary additive manufacturing (AM) apparatus in which the system and method of the present invention may be implemented;
- **FIG. 2**: is a diagrammatic illustration of a first exemplary optical layout which may be used in an AM apparatus in accordance with the invention;
- **FIG. 3**: is a diagrammatic illustration of a second exemplary optical layout which may be used in an AM apparatus in accordance with the invention;
- **FIG. 4**: is a diagrammatic illustration of components of an AM apparatus, including an embodiment of a control system according to the invention;
- **FIG. 5**: is a diagrammatic illustration of components of an AM apparatus, including an embodiment of a control system according to the invention;
- **FIG. 6**: is a diagrammatic illustration of components of an AM apparatus, including an embodiment of a control system according to the invention; and
- **FIG. 7**: is a flow diagram illustrating an exemplary method of controlling an energy beam in an AM apparatus.

### DETAILED DESCRIPTION WITH REFERENCE TO THE DRAWINGS

The following description of the invention is provided as an enabling teaching of the invention. Those skilled in the relevant art will recognise that many changes can be made to the embodiments described, while still attaining the beneficial results of the present invention. It will also be apparent that some of the desired benefits of the present invention can be attained by selecting some of the features of the present invention without utilising other features. Accordingly, those skilled in the art will recognise that modifications and adaptations to the present invention are possible and can even be desirable in certain circumstances, and are a part of the present invention. Thus, the following description is provided as illustrative of the principles of the present invention and not a limitation thereof.

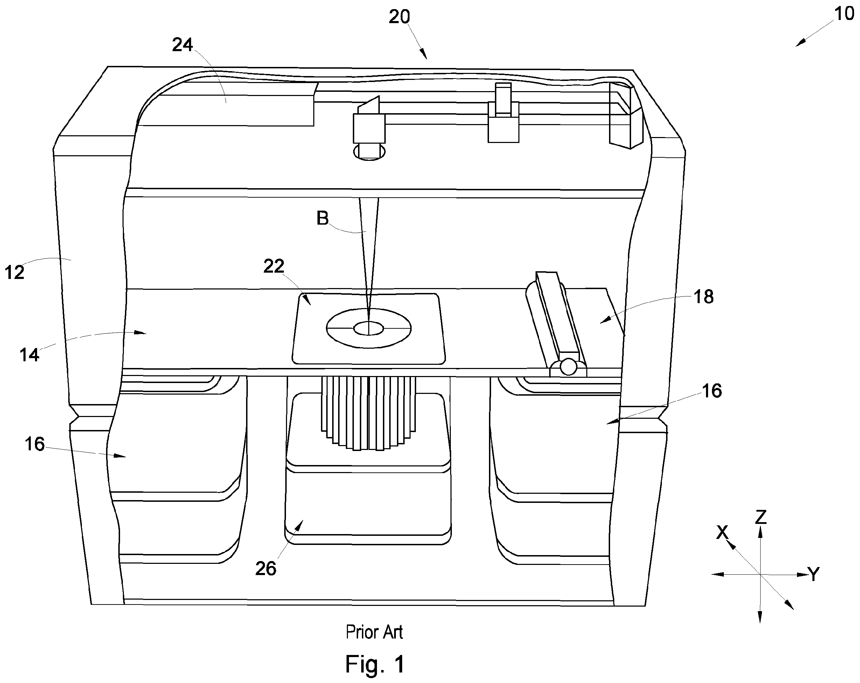

An example of a known additive manufacturing (AM) apparatus 10 is shown in FIG 1. The AM apparatus 10 is a conventional laser sintering (powder bed fusion) apparatus. FIG. 1 also shows a coordinate system (axes X-Y-Z) with reference to which the structure and function of the apparatus 10 is described below.

The apparatus 10 includes a housing 12 which houses a platform 14, two material containers 16, a material deposition arrangement 18 and an optical arrangement 20 spaced above the platform 14 along the Z-axis of the apparatus 10.

The housing 12 is a sealed enclosure which provides a processing environment operatively containing an inert gas, such as argon, helium or nitrogen.

The platform 14 is generally planar and extends in a generally horizontal X-Y plane defined by the X-axis and the Y-axis of the apparatus 10. A vertically displaceable (along the Z-axis) working area 22 is provided in a central region of the build platform 14.

The material deposition arrangement 18 is configured to travel across the build platform 14 in the direction of the Y-axis to deposit layers of powder material onto the working area 22 to form a material bed, in use. The thickness of a deposited layer is typically of the order of 30µm to 1000µm.

The apparatus 10 further includes a moving arrangement in the form of a piston and cylinder arrangement 26 which is configured to move the working area 22 incrementally downwardly in order for each layer of material to be deposited to maintain the surface of the material bed at a constant level, in use, as will be well understood by those of ordinary skill in the art.

The optical arrangement 20 directs an energy beam "B" produced by an energy source in the form of a laser 24 onto the working area 22, in use, so as to consolidate powder material forming part of the material bed.

The optical arrangement 20 includes a number of optical components which direct and focus the energy beam B produced by the laser 24 ultimately to reach a desired point or zone (typically referred to as a "spot") on the working area 22. The optical components are arranged along an optical path of the energy beam.

It will be appreciated that the apparatus 10 of FIG. 1 is shown as an example of an apparatus in which the system and method of the invention may be implemented and that the invention may find application in apparatuses making use of other scanning and consolidating arrangements as well as other laser material processing methods, such as cutting, welding and the like.

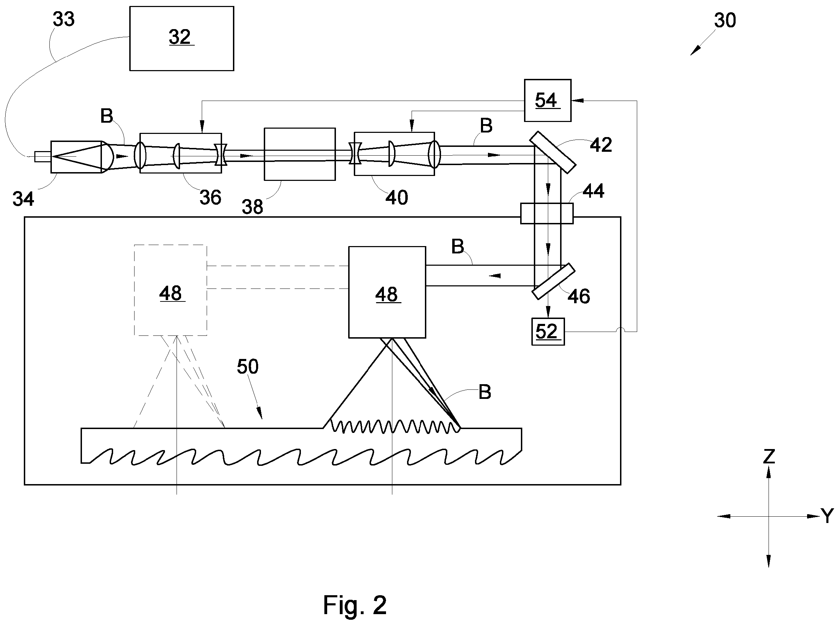

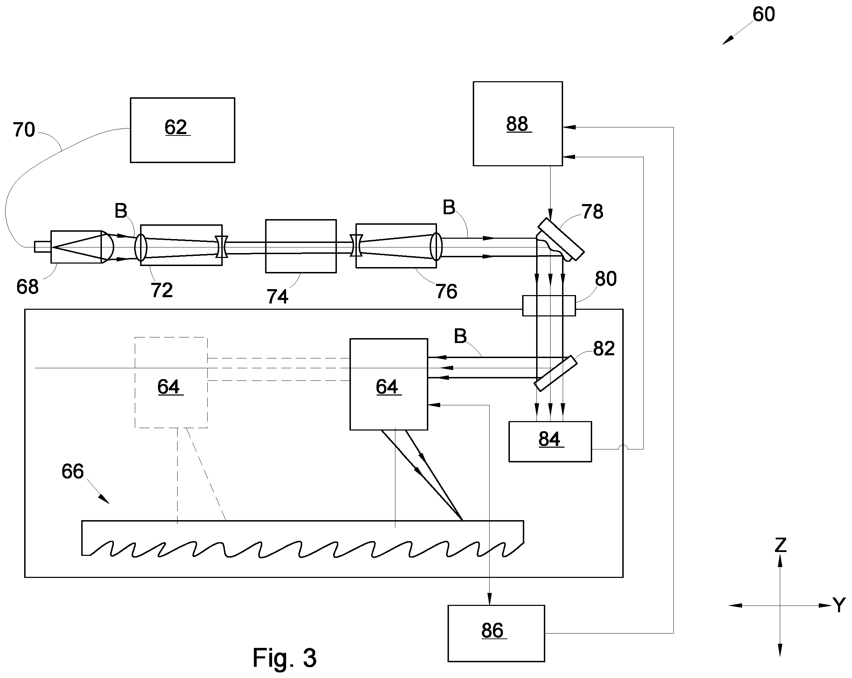

FIGs 2 and 3 illustrate two exemplary optical layouts which can be employed in accordance with the invention.

In the exemplary layout 30 of FIG. 2, the AM apparatus includes a fibre laser 32 and a movable scanning unit 48. The scanning unit 48 includes a post-objective galvanometer scanner for consolidating material deposited in the working area 50.

A number of optical components are provided to direct the energy beam B along its optical path, from the laser 32 to the scanning unit 48: a collimator 34 which is coupled to the fibre laser 32 by an optical fibre 33, a first motorised optical zoom telescope in the form of a beam reducing telescope (BRT) 36, an optional optical switch 38, a second motorised optical zoom telescope in the form of a beam expanding telescope (BET) 40, a first 45° mirror 42, a horizontally extending window 44 and a second 45° mirror 46.

The scanning unit 48 is movable along the Y-axis. The BRT 36 and BET 40 each include multiple lenses, two of which are movable by spindles which are coupled to actuators in the form of stepper motors, and one of which is fixed.

FIG. 2 also shows a beam sensor 52 and a control unit 54. The beam sensor 52 is configured to monitor at least one property of the energy beam (e.g. diameter) at a predefined monitoring point and transmit measured values to the control unit 54. The control unit 54 is configured to analyse a received value it obtains from the beam sensor 52. If the value, or a processed value associated therewith, is not equal to a predefined value or is not within a predefined range of values, the control unit 54 causes adjustment of the BRT 36 and/or the BET 40. In this way, thermal lensing can be compensated for through adjustment of the telescopes 36 and 40. These aspects will be described in greater detail below.

In the exemplary layout 60 of FIG. 3, the AM apparatus includes a fibre laser 62 and a movable scanning unit 64. The scanning unit 64 includes a post-objective galvanometer scanner for consolidating material deposited in the working area 66.

A number of optical components are provided to direct the energy beam B along its optical path, from the laser 62 to the scanning unit 64: a collimator 68 which is coupled to the fibre laser 62 by an optical fibre 70, a fixed BRT 72, an optional optical switch 74, a fixed BET 76, a deformable mirror 78, a horizontally extending window 80 and a 45° mirror 82.

The scanning unit 64 is movable along the Y-axis. The BRT 72 and BET 76 do not necessarily have adjustable lenses.

FIG. 3 also shows a beam sensor 84, a scanning unit position sensor 86 and a control unit 88. The beam sensor 84 is configured to monitor at least one property of the energy beam at a monitoring point and transmit measured values to the control unit 88. The scanning unit position sensor 86 is configured to sense the position of the scanning unit 64 along the Y-axis and transmit feedback to the control unit 88 regarding this position. The control unit 88 is configured to analyse the received values and feedback. The control unit 88 is configured to cause adjustment of the mirror 78 based on the received values and feedback if one or more measured values or processed values associated with the measured values do not equal predefined values or are not within predefined ranges. The shape of surfaces of the mirror 78 are adjustable by applying voltages to actuators supporting the mirror 78. In this way, thermal lensing can be compensated for by way of so-called "adaptive optics".

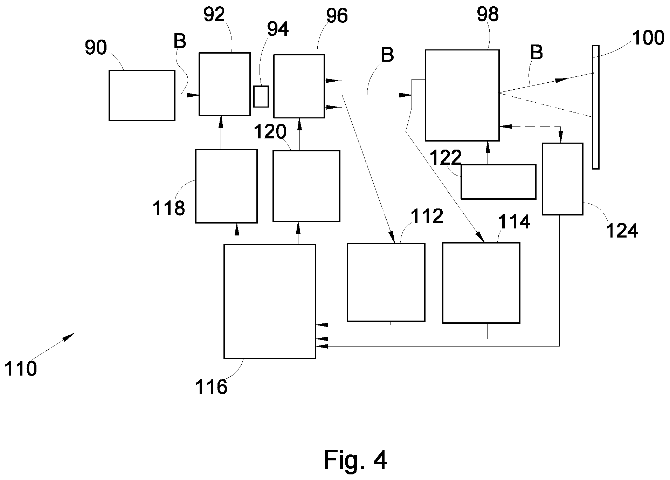

FIGs 4-6 are diagrammatic illustrations of components of an AM apparatus, each including an embodiment of a control system according to the invention. These figures also illustrate an optical path followed by the energy beam B.

In FIGs 4-6, like reference numerals refer to like components. In each case, in addition to the control system, the AM apparatus includes a laser 90, an adjustable BRT 92, an optional optical switch 94, an adjustable BET 96 and a movable scanning unit 98, which directs the energy beam B onto a working surface 100.

The control system 110 of FIG. 4 includes first and second beam sensors 112 and 114, a control unit 116 and first and second actuators 118 and 120. The first actuator 118 is a stepper motor configured to actuate the movable lenses of the BRT 92 and the second actuator 120 is a stepper motor configured to actuate the movable lenses of the BET 96.

The control system 110 further includes a scanner controller 122 and a scanning unit position sensor 124.

The beam sensors 112 and 114 are configured to monitor one or more properties of the energy beam along the optical path. The first beam sensor 112 monitors a property at a point near the BET 96 and the second beam sensor 114 monitors a property near the entrance of the scanning unit 98.

Examples of properties which can be measured are beam spot size, a spatial profile, a power density, a focus location, a beam waist size, a beam position, divergence and beam quality. It will be understood that any suitable property or properties may be measured and that any suitable number of beam sensors may be employed. It will also be understood that the beam sensors 112 and 114 may measure the same or different properties of the energy beam.

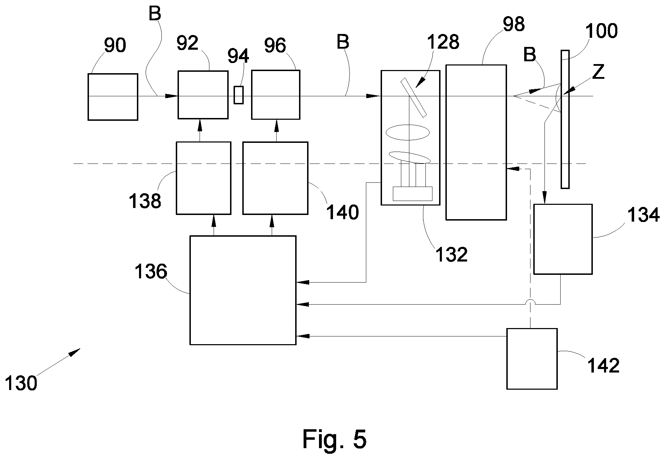

In the example of FIG. 5, a beam splitter 128 is included between the BET 96 and the scanning unit 98.

The control system 130 of FIG. 5 includes first and second beam sensors 132 and 134, a control unit 136 and first and second actuators 138 and 140. The first actuator 138 is a stepper motor configured to actuate the movable lenses of the BRT 92 and the second actuator 140 is a stepper motor configured to actuate the movable lenses of the BET 96.

In the example of FIG. 5, the first beam sensor 132 is a beam waist analyser camera which characterises the energy beam's spatial profile, beam quality and waist location and the second beam sensor 134 includes a camera and an imaging lens, permitting it to monitor beam spot size at a focus zone Z on the working surface 100. A scanning unit position sensor 142 is also shown in FIG. 5. Thermal lensing is compensated for by adjusting the BRT 92 and the BET 96 based on the values received from the sensors 132 and 134 by the control unit 136.

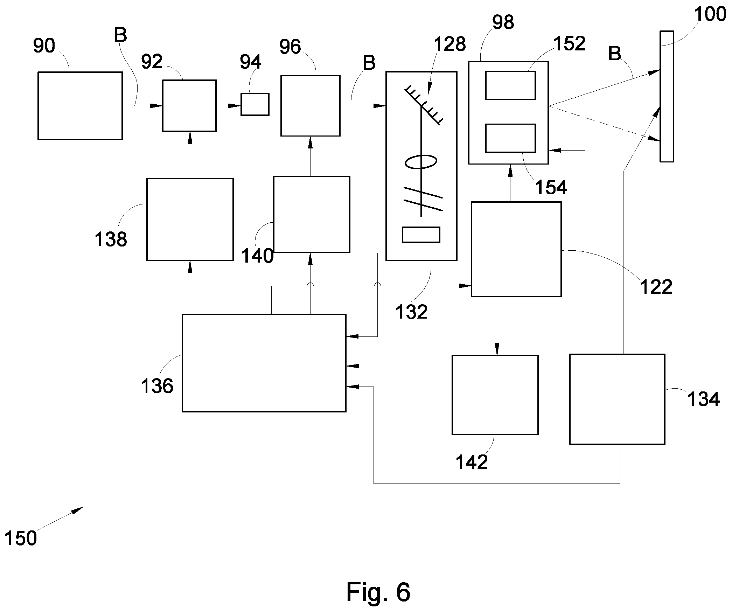

The control system 150 of FIG. 6 is substantially similar to the control system 130 of FIG. 5. However, in this example, the scanning unit 98 has an internal beam actuator 152 and position sensor 154. Thermal lensing inside the scanning unit 98 is addressed by adjusting an internal BET (not shown) of the scanning unit 98 based on values obtained from the beam sensor 134 and/or the position sensor 154.

In FIGs 4 to 6, the control unit 116, 136 is electronically coupled to the beam sensors 112, 114, 132, 134 and the actuators 118, 120, 138, 140. The control unit is provided with circuitry and software enabling the control system 110, 130, 150 to control the energy beam B of the additive manufacturing apparatus in real time. More specifically, the control system 110, 130, 150 is capable of monitoring the energy beam and adjusting variable properties of the energy beam in order to compensate for thermal lensing.

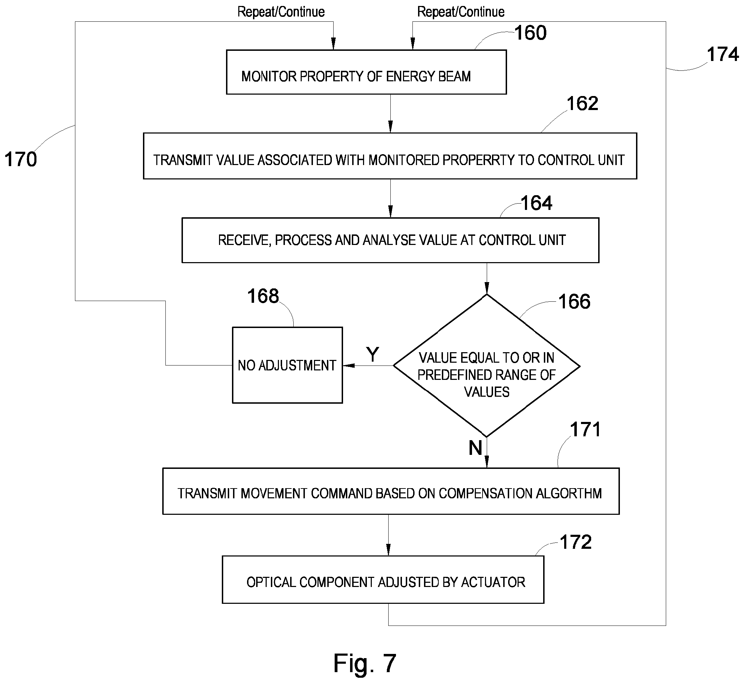

FIG. 7 illustrates some of the steps conducted in a continuous process whereby the control system 110 of FIG. 4 compensates for thermal lensing.

It should be appreciated that the stages referred to below are typically carried out continuously or at a suitable frequency and may overlap at least to some extent.

At a first stage 160, the beam sensors 112 and 114 are used to monitor the energy beam as described above while the AM apparatus is in operation.

The beam sensors 112 and 114 transmit values for the monitored properties to the control unit 116 at a next stage 162.

The control unit 116 receives, processes and analyses these values at a next stage 164. Thermal lensing manifests as measurable changes in the monitored properties of the energy beam. The aim of the processing and analysis is to determine whether or not the monitored properties are equal to or within a predefined range of acceptable values, at a next stage 166. If a property is found to be within an acceptable range, no adjustment is necessary, as indicated by stage 168. The directional arrow 170 indicates that monitoring is repeated or continues even when all monitored properties are found to have acceptable values at a certain point in time.

On the other hand, if the control unit 116 determines that a value received from the first beam sensor 112 and/or the second beam sensor 114 is not equal to a predefined value or is not within a predefined range of values, it causes adjustment of one or more optical components of the optical arrangement.

In this example, with reference to FIG. 4, the control unit 116 creates and transmits a movement command to the first actuator 118 and/or second actuator 120 at a next stage 171, which causes the BRT 92 and/or the BET 96 to be incrementally adjusted at a next stage 172. Again, the directional arrow 174 indicates that monitoring is repeated or continues during and after adjustment of optical components.

As an example, adjustment relating to monitoring carried out by the first beam sensor 112 will be described. The magnitude and sign of thermal lensing can be measured by monitoring the change in the spatial profile of the beam (e.g. its waist size and/or waist location) using the first beam sensor 112. The control unit 116 uses these values to determine corrective telescope lens positions for the BRT 92 and/or the BET 96 which can counteract a thermally-induced change in collimation.

The control unit 116 transmits appropriate motor movement commands to the actuators 118 and 120 associated with BRT 92 and/or BET 96, respectively, in order to position their inline lenses at the required positions. Adjustment of lenses may typically include axial displacement of motorised lenses relative to each other.

These actions are repeated continuously (or at a suitable frequency) in a feedback loop to ensure that desired energy beam properties are maintained during operation of the AM apparatus. Typically, incremental adjustments may be made until the difference between a monitored beam property and a reference beam property is sufficiently small.

It will be understood that numerous forms of compensation algorithms may be employed in software of the control unit to acquire and process beam properties and determine corrective action. As an example, the compensation algorithm may conduct a systematic search through a four-dimensional input parameter space defined by the four variable lens positions of the BRT 92 and the BET 96 until optimal results are achieved. The search can be conducted in real-time and/or using an analytical predictive model. In the case of a collimated energy beam entering a BRT/BET, a trajectory can be defined in the input parameter space for which the energy beam size would be reduced or expanded while near field divergence would remain relatively constant. Searching orthogonally along this trajectory results primarily in a change in divergence with minor change in output beam size. Based on the changes observed using the beam sensor 112, a vector in parameter space can be calculated with proportional orthogonal components. The lenses are then moved along this vector and changes are again monitored using the beam sensor 112. If the correction is not satisfactory, the above steps are repeated until each measured parameter equals a reference value (within a certain margin of error).

The Applicant believes that the present invention provides numerous advantages.

As mentioned above, the Applicant has found that the power density of the focused energy beam spot changes significantly over time after the source is switched on due to thermal lensing in the optical path or train. For instance, at a laser power of 3 kW, the Applicant has found that a steady state is reached only after tens of seconds resulting in a 2 to 3 fold increase in power density, while the allowed change in power density (for parts of acceptable quality) is typically approximately 10% and has to be maintained throughout the manufacturing process. The Applicant believes that the present invention may alleviate this problem through active control of beam properties.

The Applicant has found that the present invention can be used to compensate for thermal lensing at the relatively high power levels associated with AM.

Continuous adjustments of variable energy beam parameters will ensure that the high-powered beam entering the scanning unit and/or reaching the working surface remains satisfactorily controlled. For example, the diameter and beam divergence (or collimation) of the energy beam at an entrance of the scanning unit can be maintained at desired values or within a desired range. As a result, high quality AM parts can be manufactured.

The Applicant thus believes that the present invention can improve part accuracy and resolution by compensating for or counteracting thermal lensing.

## Claims

1. A control system (110, 130, 150) for controlling an energy beam (B) in an additive manufacturing apparatus (30, 60), the control system including:
at least one beam sensor (52, 84) configured to monitor at least one property of an energy beam (B) produced by an energy source (32, 62, 90) and directed onto a working surface (50, 66) by an optical arrangement which includes optical components arranged along an optical path of the energy beam between the energy source (B) and the working surface (50, 66), the optical components including at least one adjustable optical component in the form of at least one telescope (92, 96), typically a zoom telescope, and/or at least one deformable mirror (78), wherein thermal lensing in the optical path manifests as measurable changes in said at least one property and wherein said at least one beam sensor is configured to monitor said at least one property at or near said optical path;
at least one beam actuator; and
a control unit (54, 88, 116, 136) in electronic communication with the at least one beam sensor (52, 84), the control unit (54, 88, 116, 136) being configured to cause adjustment of the adjustable optical component by axial movement of the adjustable optical component or a subcomponent thereof and/or by changing a shape of the adjustable optical component or a subcomponent thereof; and wherein the control system is configured to continuously repeat the steps of:
monitoring the at least one property of the energy beam by the at least one beam sensor (52, 54);
transmitting a value associated with one of the at least one monitored properties to the control unit;
receiving, by the control unit, the transmitted value;
processing by the control unit, the received value to obtain a processed received value;
analysing , by the control unit, the processed received value to determine whether the processed received value is equal to or within a range of acceptable thermal lensing value(s); and
if the processed received value is not equal to or is not within the range of acceptable thermal lensing value(s), causing adjustment of at least one variable parameter associated with the energy beam by causing adjustment of the at least one adjustable optical component of the optical arrangement by transmitting a movement command to the at least one beam actuator associated with the adjustable optical component, the at least one beam actuator being configured to receive the movement command and, in response to receiving the movement command, causing adjustment of the adjustable optical component in order to compensate for the thermal lensing in the optical path.

2. A control system as claimed in claim 1, whereby adjustment of the at least one variable parameter includes adjustment of the energy source of the energy beam.

3. A control system as claimed in claim 1 or claim 2, whereby the at least one beam sensor is configured to monitor the at least one property at or near a monitoring point along the optical path between the energy source and a scanning unit of the optical arrangement, the energy source preferably being a high energy or high-power laser, with the monitoring point being between one or more primary optical components of the optical arrangement and the scanning unit, the primary optical components preferably consisting of one or more of: a collimator, a beam reducing telescope (BRT), a high-speed modulation unit or optical switch, a beam expanding telescope (BET), one or more mirrors and one or more laser windows and/or the at least one beam sensor being configured to monitor the at least one property at or near an entrance of the scanning unit, typically in the region of the entrance of the scanning unit.

4. A control system as claimed in any one of the preceding claims, whereby the at least one beam sensor is configured to monitor the at least one property at or near a monitoring point at or near a focus zone on the working surface or in a conjugated plane and preferably the at least one beam sensor is configured to monitor energy beam spot size and/or the size of a melt pool.

5. A control system as claimed in any one of the preceding claims including at least two beam sensors, one of the beam sensors being configured to monitor the at least one property at or near a monitoring point between the energy source and a scanning unit of the optical arrangement, and the other beam sensor being configured to monitor the at least one property at or near a second monitoring point at the focus zone or its conjugated plane.

6. A control system as claimed in any one of the preceding claims, whereby a plurality of beam sensors is provided to monitor the at least one property at or near a monitoring point, which optionally is at the focus zone or its conjugated plane and preferably at a plurality of monitoring points, each monitoring point having one or more different beam sensors associated therewith.

7. A control system as claimed in claim 1 or 2, whereby at least one of the adjustable optical components is a Beam Expanding Telescope (BET) or a Beam Reducing Telescope (BRT), and the at least one beam actuator is configured to displace at least one lens of said telescope (92, 96), the displacement of the lens typically being axial displacement.

8. A control system as claimed in any one of the preceding claims, whereby when the at least one adjustable optical component which is adjusted is at least one deformable mirror, the shape of mirror surface or surfaces are adjustable by applying voltages to a beam actuator supporting the mirror.

9. A control system as claimed in any one of the preceding claims, whereby the at least one beam sensor includes one or more sensing components, a beam splitter, a focusing lens, filters, and other optical components, the sensing component preferably including one or more of a camera, such as a "beam waist analyser" camera which is configured to monitor a plurality of axially spaced slices of the beam diameter or a slit-scanner.

10. A control system as claimed in any one of the preceding claims, whereby the at least one property of the energy beam includes one or more of: a beam spot size, a spatial profile, a power density, a focus location, a beam waist size, a beam position, divergence, beam quality (M²-value) and wave front shape and in that the working surface is a surface of a working area defined by a build platform or a surface of a material bed deposited on a build platform of the additive manufacturing apparatus.

11. A method of controlling an energy beam (B) in an additive manufacturing apparatus (30, 60), wherein the energy beam is produced by an energy source and directed onto a working surface by an optical arrangement, the optical arrangement including optical components arranged along an optical path of the energy beam between the energy source and the working surface, the optical components including at least one adjustable optical component in the form of at least one telescope and/or at least one deformable mirror, the additive manufacturing apparatus including at least one beam sensor (52, 84) configured to monitor at least one property of an energy beam (B) at or near a monitoring point along the optical path of the energy beam between the energy source and the working surface,
wherein thermal lensing in the optical path manifests as measurable changes in the monitored property;
the method including the continuously repeated steps of:
monitoring the at least one property of the energy beam by the at least one beam sensor (52, 84);
transmitting a value associated with one of the at least one monitored properties to a control unit (54, 88, 116, 136) in electronic communication with the at least one beam sensor (52, 84);
receiving, by the control unit (54, 88, 116, 136), the transmitted value;
processing, by the control unit, the received value to obtain a processed received value;
analysing, by the control unit, the processed received value to determine whether the processed received value is equal to or within a range of acceptable thermal lensing value(s); and
if the processed received value is not equal to or is not within the range of acceptable thermal lensing value(s), causing, by the control unit, adjustment of at least one variable parameter associated with the energy beam by causing adjustment of the at least one adjustable optical component of the optical arrangement in order to compensate for the thermal lensing in the optical path.

12. A method as claimed in claim 11, whereby the step of causing adjustment of the at least one variable parameter includes causing adjustment of the energy source of the energy beam.

13. A method as claimed in claim 11 or 12, including continuously or periodically monitoring the at least one property and incrementally adjusting the at least one adjustable optical component of the optical arrangement each time the received value is found to be not equal to or to be not within the thermal lensing value(s), the method optionally including monitoring the at least one property at or near a monitoring point along an optical path of the energy beam and/or monitoring the at least one property at or near a focus zone on the working surface or at a conjugated plane thereof and/or which includes monitoring different properties at the monitoring point and focus zone, respectively and/ or in which a plurality of monitoring points is provided, each monitoring point having one or more different beam sensors associated therewith and/or in which the step of causing adjustment of the at least one adjustable optical component includes applying a compensation algorithm in order to determine movement commands to be transmitted to at least one beam actuator, the step of causing adjustment of the at least one adjustable optical component further including transmitting the movement command to the at least one beam actuator.

14. An additive manufacturing apparatus (30, 60), including an optical arrangement which includes optical components arranged along an optical path of an energy beam produced by an energy source between the energy source and a working surface for directing the energy beam onto a material bed, the optical components including at least one adjustable optical component in the form of at least one telescope (92, 96), typically a zoom telescope, and/ or at least one deformable mirror (78), and a control system as claimed in claim 1, the control system configured to control the at least one adjustable optical components of the optical arrangement in order to compensate for thermal lensing.

## Patentansprüche

1. Steuersystem (110, 130, 150) zur Steuerung eines Energiestrahls (B) in einer additiven Fertigungseinrichtung (30, 60), wobei das Steuersystem beinhaltet:
mindestens einen Strahlsensor (52, 84), der konfiguriert ist, um mindestens eine Eigenschaft eines von einer Energiequelle (32, 62, 90) erzeugten und von einer optischen Anordnung auf eine Arbeitsfläche (50, 66) gerichteten Energiestrahls (B) zu überwachen, die optischen Komponenten beinhaltet, entlang des optischen Pfads des Energiestrahls zwischen der Energiequelle (B) und der Arbeitsfläche (50, 66) angeordnet sind, wobei die optischen Komponenten mindestens eine anpassbare optische Komponente in Form mindestens eines Teleskops (92, 96), typischerweise eines Zoom-Teleskops, und/oder mindestens einen verformbaren Spiegel (78) beinhalten, wobei sich die thermische Linsenwirkung im optischen Pfad als messbare Änderungen der mindestens einen Eigenschaft äußert und wobei der mindestens eine Strahlsensor konfiguriert ist, um die mindestens eine Eigenschaft im oder in der Nähe des optischen Pfades zu überwachen;
mindestens eine Strahl-Betätigungsvorrichtung; und
eine Steuereinheit (54, 88, 116,136) in elektronischer Verbindung mit dem mindestens einen Strahlsensor (52, 84), wobei die Steuereinheit (54, 88, 116, 136) konfiguriert ist, um zu veranlassen
Anpassen der anpassbaren optischen Komponente durch axiale Bewegung der anpassbaren optischen Komponente oder einer Teilkomponente davon und/oder durch Ändern einer Gestalt der anpassbaren optischen Komponente oder einer Teilkomponente davon; und wobei das Steuersystem konfiguriert ist, um die Schritte kontinuierlich zu wiederholen zum:
Überwachen der mindestens einen Eigenschaft des Energiestrahls durch den mindestens einen Strahlsensor (52, 54);
Übertragen eines Wertes, der einer der mindestens einen überwachten Eigenschaften zugeordnet ist, an die Steuereinheit;
Empfangen des übertragenen Wertes durch die Steuereinheit;
Verarbeiten des empfangenen Wertes durch die Steuereinheit, um einen verarbeiteten empfangenen Wert zu erhalten;
Analysieren des verarbeiteten empfangenen Werts durch die Steuereinheit, um zu bestimmen, ob der verarbeitete empfangene Wert gleich dem oder innerhalb eines Bereichs für (einen) zulässige(n) thermische(n) Linsenwirkungswert(e) liegt; und
wenn der verarbeitete empfangene Wert nicht gleich dem/den zulässigen thermischen Linsenwirkungswert(en) ist oder außerhalb des Bereichs liegt, Veranlassen der Anpassung mindestens eines dem Energiestrahl zugeordneten variablen Parameters durch Veranlassen der Anpassung der mindestens einen anpassbaren optischen Komponente der optischen Anordnung durch Übertragen eines Bewegungsbefehls an die mindestens eine Strahl-Betätigungsvorrichtung, die der anpassbaren optischen Komponente zugeordnet ist, wobei die mindestens eine Strahl-Betätigungsvorrichtung konfiguriert ist, um den Bewegungsbefehl zu empfangen und als Reaktion auf den Empfang des Bewegungsbefehls Veranlassen des Anpassens der anpassbaren optischen Komponente, um die thermische Linsenwirkung im optischen Pfad zu kompensieren.

2. Steuersystem nach Anspruch 1, wobei Anpassen des mindestens einen variablen Parameters Anpassen der Energiequelle des Energiestrahls beinhaltet.

3. Steuersystem nach Anspruch 1 oder 2, wobei der mindestens eine Strahlsensor konfiguriert ist, um mindestens eine Eigenschaft an oder nahe einem Überwachungspunkt entlang des optischen Pfades zwischen der Energiequelle und einer Scan-Einheit der optischen Anordnung zu überwachen, wobei die Energiequelle vorzugsweise ein Hochenergie- oder Hochleistungslaser ist, sich der Überwachungspunkt zwischen einer oder mehreren primären optischen Komponenten der optischen Anordnung und der Scan-Einheit befindet, die primären optischen Komponenten vorzugsweise aus einem oder mehreren bestehen von: einem Kollimator, einem Strahlreduzierungsteleskop (BRT), einer Hochgeschwindigkeitsmodulationseinheit oder einem optischen Schalter, einem Strahlaufweitungsteleskop (BET), einem oder mehreren Spiegeln und einem oder mehreren Laserfenstern und/oder der mindestens eine Strahlsensor konfiguriert ist, um die mindestens eine Eigenschaft am oder in der Nähe eines Eingangs zu überwachen, typischerweise im Bereich des Eingangs der Scan-Einheit.

4. Steuersystem nach einem der vorstehenden Ansprüche, wobei der mindestens eine Strahlsensor konfiguriert ist, um die mindestens eine Eigenschaft an oder nahe einem Überwachungspunkt an oder nahe einer Fokuszone auf der Arbeitsfläche oder in einer konjugierten Ebene zu überwachen, und der mindestens eine Strahlsensor vorzugsweise konfiguriert ist, um die Energiestrahlfleckgröße und/oder die Größe eines Schmelzbades zu überwachen.

5. Steuersystem nach einem der vorstehenden Ansprüche, das mindestens zwei Strahlsensoren beinhaltet, wobei einer der Strahlsensoren konfiguriert ist, um die mindestens eine Eigenschaft an oder in der Nähe eines Überwachungspunktes zwischen der Energiequelle und einer Scan-Einheit der optischen Anordnung zu überwachen, und der andere Strahlsensor konfiguriert ist, um die mindestens eine Eigenschaft an oder in der Nähe eines zweiten Überwachungspunktes in der Fokuszone oder ihrer konjugierten Ebene zu überwachen.

6. Steuersystem nach einem der vorstehenden Ansprüche, wobei eine Vielzahl von Strahlsensoren bereitgestellt ist, um mindestens eine Eigenschaft an oder in der Nähe eines Überwachungspunktes zu überwachen, der sich optional in der Fokuszone oder ihrer konjugierten Ebene und vorzugsweise an einer Vielzahl von Überwachungspunkten befindet, wobei jeder Überwachungspunkt einen oder mehrere verschiedene ihm zugeordnete Strahlsensoren aufweist.

7. Steuersystem nach Anspruch 1 oder 2, wobei mindestens eine der anpassbaren optischen Komponenten ein Strahlaufweitungsteleskop (BET) oder ein Strahlreduzierungsteleskop (BRT) ist, und die mindestens eine Strahl-Betätigungsvorrichtung konfiguriert ist, um mindestens eine Linse des Teleskops (92, 96) zu verschieben, wobei die Verschiebung der Linse typischerweise eine axiale Verschiebung ist.

8. Steuersystem nach einem der vorstehenden Ansprüche, wobei, wenn die mindestens eine anpassbare optische Komponente, die angepasst wird, mindestens ein verformbarer Spiegel ist, die Gestalt der Spiegeloberfläche oder -oberflächen durch Anlegen von Spannungen an eine den Spiegel tragende Strahl-Betätigungsvorrichtung anpassbar ist.

9. Steuersystem nach einem der vorstehenden Ansprüche, wobei der mindestens eine Strahlsensor eine oder mehrere Sensorkomponenten, einen Strahlteiler, eine Fokussierlinse, Filter und andere optische Komponenten beinhaltet, wobei die Sensorkomponente vorzugsweise eine oder mehrere Kameras, wie beispielsweise eine "Strahltaillenanalysator"-Kamera, die konfiguriert ist, um eine Vielzahl von axial beabstandeten Scheiben des Strahldurchmessers zu überwachen, oder einen Spaltscanner beinhaltet.

10. Steuersystem nach einem der vorstehenden Ansprüche, wobei die mindestens eine Eigenschaft des Energiestrahls eines oder mehr beinhaltet von:
einer Strahlfleckgröße, einem räumlichen Profil, einer Leistungsdichte, einer Fokusstelle, einer Strahltaillengröße, einer Strahlposition, Divergenz, Strahlqualität (M²-Wert) und Wellenfrontgestalt, wobei die Arbeitsfläche eine Oberfläche eines Arbeitsbereichs ist, der durch eine Bauplattform definiert ist, oder eine Oberfläche eines Materialbetts, das auf einer Bauplattform der additiven Fertigungseinrichtung aufgebracht ist.

11. Verfahren zur Steuerung eines Energiestrahls (B) in einer additiven Fertigungseinrichtung (30, 60), wobei der Energiestrahl von einer Energiequelle erzeugt, und durch eine optische Anordnung auf eine Arbeitsfläche gerichtet wird, wobei die optische Anordnung optische Komponenten beinhaltet, die entlang eines optischen Pfades des Energiestrahls zwischen der Energiequelle und der Arbeitsfläche angeordnet sind, wobei die optischen Komponenten mindestens eine anpassbare optische Komponente in Form mindestens eines Teleskops und/oder mindestens eines verformbaren Spiegels beinhaltet, wobei die additive Fertigungseinrichtung mindestens einen Strahlsensor (52, 84) beinhaltet, der konfiguriert ist, um mindestens eine Eigenschaft eines Energiestrahls (B) an oder in der Nähe eines Überwachungspunktes entlang des optischen Pfads des Energiestrahls zwischen der Energiequelle und der Arbeitsfläche zu überwachen,
wobei sich die thermische Linsenwirkung im optischen Pfad als messbare Änderungen der überwachten Eigenschaft äußert;
das Verfahren die kontinuierlich wiederholten Schritte beinhaltet zum:
Überwachen der mindestens einen Eigenschaft des Energiestrahls durch den mindestens einen Strahlsensor (52, 84);
Übertragen eines Wertes, der einer der mindestens einen überwachten Eigenschaften zugeordnet ist, an eine Steuereinheit (54, 88, 116, 136), die in elektronischer Verbindung mit dem mindestens einen Strahlsensor (52, 84) steht;
Empfangen des übertragenen Wertes durch die Steuereinheit (54, 88, 116,136);
Verarbeiten, des empfangenen Wertes durch die Steuereinheit, um einen verarbeiteten empfangenen Wert zu erhalten;
Analysieren des verarbeiteten empfangenen Werts durch die Steuereinheit, um zu bestimmen, ob der verarbeitete empfangene Wert gleich dem oder innerhalb eines Bereichs für (einen) zulässige(n) thermische(n) Linsenwirkungswert(e) liegt; und
wenn der verarbeitete empfangene Wert nicht gleich dem/den zulässigen thermischen Linsenwirkungswert(en) ist oder außerhalb des Bereichs liegt, Veranlassen durch die Steuereinheit der Anpassung mindestens eines dem Energiestrahl zugeordneten variablen Parameters durch Veranlassen der Anpassung der mindestens einen anpassbaren optischen Komponente der optischen Anordnung, um die thermische Linsenwirkung im optischen Pfad zu kompensieren.

12. Verfahren nach Anspruch 11, wobei der Schritt zum Veranlassen der Anpassung des mindestens einen variablen Parameters Veranlassen der Anpassung der Energiequelle des Energiestrahls beinhaltet.

13. Verfahren nach Anspruch 11 oder 12, beinhaltend:
kontinuierliches oder periodisches Überwachen mindestens einer Eigenschaft und inkrementelles Anpassen der mindestens einen anpassbaren optischen Komponente der optischen Anordnung jedes Mal, wenn herausgefunden wird, dass der empfangene Wert nicht gleich ist oder nicht innerhalb des/der thermischen Linsenwirkungswert(en) liegt, wobei das Verfahren optional Überwachen der mindestens einen Eigenschaft an oder nahe einem Überwachungspunkt entlang eines optischen Pfades des Energiestrahls und/oder Überwachen der mindestens einen Eigenschaft in oder in der Nähe einer Fokuszone auf der Arbeitsfläche oder auf einer konjugierten Ebene davon und/oder Überwachen verschiedener Eigenschaften jeweils am Überwachungspunkt und in der Fokuszone beinhaltet und/oder wobei eine Vielzahl von Überwachungspunkten bereitgestellt wird, wobei jeder Überwachungspunkt einen oder mehrere verschiedene zugeordnete Strahlsensoren aufweist, und/oder wobei der Schritt zum Veranlassen einer Anpassung der mindestens einen anpassbaren optischen Komponente Anwenden eines Kompensationsalgorithmus beinhaltet, um Bewegungsbefehle zu bestimmen, die an die mindestens eine Strahl-Betätigungsvorrichtung zu übertragen sind, wobei der Schritt zum Veranlassen einer Anpassung der mindestens einen anpassbaren optischen Komponente weiter Übertragen des Bewegungsbefehls an die mindestens eine Strahl-Betätigungsvorrichtung beinhaltet.

14. Additive Fertigungseinrichtung (30, 60), beinhaltend:
eine optische Anordnung, die optische Komponenten beinhaltet, die entlang eines optischen Pfades eines von einer Energiequelle erzeugten Energiestrahls zwischen der Energiequelle und einer Arbeitsfläche zum Leiten des Energiestrahls auf ein Materialbett angeordnet sind, wobei die optischen Komponenten mindestens eine anpassbare optische Komponente in Form von mindestens einem Teleskop (92, 96), typischerweise einem Zoom-Teleskop, und/oder mindestens einem verformbaren Spiegel (78) beinhalten, und ein Steuersystem nach Anspruch 1, wobei das Steuersystem konfiguriert ist, um die mindestens eine anpassbare optische Komponente der optischen Anordnung zu steuern, um die thermische Linsenwirkung zu kompensieren.

## Revendications

1. Système de commande (110, 130, 150) pour la commande d'un faisceau d'énergie (B) dans un appareil de fabrication additive (30, 60), le système de commande incluant :
au moins un capteur de faisceau (52, 84) configuré pour surveiller au moins une propriété d'un faisceau d'énergie (B) produit par une source d'énergie (32, 62, 90) et dirigé sur une surface de travail (50, 66) par un ensemble optique qui inclut des composants optiques agencés le long d'un trajet optique du faisceau d'énergie entre la source d'énergie (B) et la surface de travail (50, 66), les composants optiques incluant au moins un composant optique réglable sous la forme d'au moins un télescope (92, 96), généralement un télescope zoom, et/ou au moins un miroir déformable (78), dans lequel l'effet de lentille thermique dans le chemin optique se manifeste par des modifications mesurables de ladite au moins une propriété et dans lequel ledit au moins un capteur de faisceau est configuré pour surveiller ladite au moins une propriété au niveau ou à proximité dudit chemin optique ;
au moins un actionneur de faisceau ; et
une unité de commande (54, 88, 116, 136) en communication électronique avec le au moins un capteur de faisceau (52, 84), l'unité de commande (54, 88, 116, 136) étant configurée pour
régler le composant optique réglable par un mouvement axial du composant optique réglable ou d'un de ses sous-composants et/ou par modification d'une forme du composant optique réglable ou d'un de ses sous-composants ; et dans lequel le système de commande est configuré pour répéter en continu les étapes de :
surveillance de la au moins une propriété du faisceau d'énergie par le au moins un capteur de faisceau (52, 54) ;
transmission à l'unité de commande d'une valeur associée à une des une ou plusieurs propriétés surveillées ;
réception, par l'unité de commande, de la valeur transmise ;
traitement, par l'unité de commande, de la valeur reçue pour obtenir une valeur reçue traitée ;
analyse, par l'unité de commande, de la valeur reçue traitée afin de déterminer si la valeur reçue traitée est égale à ou comprise dans une plage de valeurs acceptables d'effet de lentille thermique ; et
si la valeur reçue traitée n'est pas égale à ou n'est pas comprise dans la plage de valeurs acceptables d'effet de lentille thermique, réglage d'au moins un paramètre variable associé au faisceau d'énergie en réglant le au moins un composant optique réglable de l'ensemble optique par la transmission d'une commande de mouvement audit au moins un actionneur de faisceau associé au composant optique réglable, ledit au moins un actionneur de faisceau étant configuré pour recevoir la commande de mouvement et, en réponse à la réception de la commande de mouvement, régler le composant optique réglable afin de compenser l'effet de lentille thermique dans le trajet optique.

2. Système de commande selon la revendication 1, dans lequel le réglage du au moins un paramètre variable inclut le réglage de la source d'énergie du faisceau d'énergie.

3. Système de commande selon la revendication 1 ou la revendication 2, dans lequel le au moins un capteur de faisceau est configuré pour surveiller la au moins une propriété au niveau ou à proximité d'un point de surveillance situé sur le trajet optique entre la source d'énergie et une unité de balayage de l'ensemble optique, la source d'énergie étant de préférence un laser à haute énergie ou à haute puissance, le point de surveillance se situant entre un ou plusieurs composants optiques principaux de l'ensemble optique et l'unité de balayage, les composants optiques principaux étant de préférence constitués d'un ou plusieurs éléments parmi : un collimateur, un télescope réducteur de faisceau (BRT), une unité de modulation à haute vitesse ou un commutateur optique, un télescope élargisseur de faisceau (BET), un ou plusieurs miroirs et une ou plusieurs fenêtres laser, et/ou le au moins un capteur de faisceau étant configuré pour surveiller la au moins une propriété au niveau ou à proximité d'une entrée de l'unité de balayage, généralement dans la zone de l'entrée de l'unité de balayage.

4. Système de commande selon l'une quelconque des revendications précédentes, dans lequel le au moins un capteur de faisceau est configuré pour surveiller la au moins une propriété au niveau ou à proximité d'un point de surveillance situé au niveau ou à proximité d'une zone de focalisation sur la surface de travail ou dans un plan conjugué, et de préférence, le au moins un capteur de faisceau est configuré pour surveiller la taille du spot du faisceau d'énergie et/ou la taille d'un bain de fusion.

5. Système de commande selon l'une quelconque des revendications précédentes, incluant au moins deux capteurs de faisceau, l'un des capteurs de faisceau étant configuré pour surveiller la au moins une propriété au niveau ou à proximité d'un point de surveillance situé entre la source d'énergie et une unité de balayage de l'ensemble optique, et l'autre capteur de faisceau étant configuré pour surveiller la au moins une propriété au niveau ou à proximité d'un deuxième point de surveillance situé dans la zone de focalisation ou son plan conjugué.

6. Système de commande selon l'une quelconque des revendications précédentes, dans lequel une pluralité de capteurs de faisceau est fournie pour surveiller la au moins une propriété au niveau ou à proximité d'un point de surveillance, qui se trouve facultativement dans la zone de focalisation ou son plan conjugué, et de préférence au niveau d'une pluralité de points de surveillance, chaque point de surveillance étant associé à un ou plusieurs capteurs de faisceau différents.

7. Système de commande selon la revendication 1 ou 2, dans lequel au moins un des composants optiques réglables est un télescope élargisseur de faisceau (BET) ou un télescope réducteur de faisceau (BRT), et le au moins un actionneur de faisceau est configuré pour déplacer au moins une lentille dudit télescope (92, 96), le déplacement de la lentille étant généralement un déplacement axial.

8. Système de commande selon l'une quelconque des revendications précédentes, dans lequel, lorsque le au moins un composant optique réglable qui est réglé est au moins un miroir déformable, la forme de la ou des surfaces du miroir est réglable en appliquant des tensions à un actionneur de faisceau supportant le miroir.

9. Système de commande selon l'une quelconque des revendications précédentes, dans lequel le au moins un capteur de faisceau inclut un ou plusieurs composants de détection, un séparateur de faisceau, une lentille de focalisation, des filtres et d'autres composants optiques, le composant de détection incluant de préférence un ou plusieurs dispositifs parmi une caméra, telle une caméra de type « analyseur de col de faisceau » qui est configurée pour surveiller une pluralité de tranches espacées axialement du diamètre du faisceau, ou un scanner à fente.

10. Système de commande selon l'une quelconque des revendications précédentes, dans lequel la au moins une propriété du faisceau d'énergie inclut une ou plusieurs des caractéristiques suivantes :
une taille de spot du faisceau, un profil spatial, une densité de puissance, un emplacement de focalisation, une taille de col du faisceau, une position du faisceau, une divergence, une qualité du faisceau (valeur M²) et une forme de front d'onde et dans lequel la surface de travail est une surface d'une zone de travail définie par une plateforme de fabrication ou une surface d'un lit de matériau déposé sur une plateforme de fabrication de l'appareil de fabrication additive.

11. Procédé de commande d'un faisceau d'énergie (B) dans un appareil de fabrication additive (30, 60), dans lequel le faisceau d'énergie est produit par une source d'énergie et dirigé sur une surface de travail par un ensemble optique, l'ensemble optique incluant des composants optiques agencés le long d'un trajet optique du faisceau d'énergie entre la source d'énergie et la surface de travail, les composants optiques incluant au moins un composant optique réglable sous la forme d'au moins un télescope et/ou d'au moins un miroir déformable, l'appareil de fabrication additive incluant au moins un capteur de faisceau (52, 84) configuré pour surveiller au moins une propriété d'un faisceau d'énergie (B) au niveau ou à proximité d'un point de surveillance le long du trajet optique du faisceau d'énergie entre la source d'énergie et la surface de travail,
dans lequel l'effet de lentille thermique dans le trajet optique se manifeste par des modifications mesurables de la propriété surveillée ;
le procédé incluant les étapes suivantes répétées en continu :
surveillance de la au moins une propriété du faisceau d'énergie par le au moins un capteur de faisceau (52, 84) ;
transmission d'une valeur associée à l'une des une ou plusieurs propriétés surveillées à une unité de commande (54, 88, 116, 136) en communication électronique avec le au moins un capteur de faisceau (52, 84) ;
réception, par l'unité de commande (54, 88, 116, 136), de la valeur transmise ;
traitement, par l'unité de commande, de la valeur reçue pour obtenir une valeur reçue traitée ;
analyse, par l'unité de commande, de la valeur reçue traitée afin de déterminer si la valeur reçue traitée est égale à ou comprise dans une plage de valeurs acceptables d'effet de lentille thermique ; et
si la valeur reçue traitée n'est pas égale à ou n'est pas comprise dans la plage de valeurs acceptables d'effet de lentille thermique, réglage, par l'unité de commande, d'au moins un paramètre variable associé au faisceau d'énergie en réglant le au moins un composant optique réglable de l'ensemble optique afin de compenser l'effet de lentille thermique dans le trajet optique.

12. Procédé selon la revendication 11, dans lequel l'étape de réglage du au moins un paramètre variable inclut le réglage de la source d'énergie du faisceau d'énergie.

13. Procédé selon la revendication 11 ou 12, incluant
la surveillance continuelle ou périodique de la au moins une propriété et le réglage de manière incrémentielle du au moins un composant optique réglable de l'ensemble optique chaque fois qu'il est constaté que la valeur reçue n'est pas égale à ou n'est pas dans la plage de valeurs d'effet de lentille thermique, le procédé incluant facultativement la surveillance de la au moins une propriété au niveau ou à proximité d'un point de surveillance le long d'un trajet optique du faisceau d'énergie, et/ou la surveillance de la au moins une propriété au niveau ou à proximité d'une zone de focalisation sur la surface de travail ou sur un plan conjugué de celle-ci, et/ou qui inclut la surveillance de différentes propriétés au niveau du point de surveillance et de la zone de focalisation, respectivement, et/ou dans lequel une pluralité de points de surveillance est prévue, chaque point de surveillance étant associé à un ou plusieurs capteurs de faisceau différents, et/ou dans lequel l'étape de réglage du au moins un composant optique réglable inclut l'application d'un algorithme de compensation afin de déterminer des commandes de mouvement à transmettre à au moins un actionneur de faisceau, l'étape de réglage du au moins un composant optique réglable incluant en outre la transmission de la commande de mouvement audit au moins un actionneur de faisceau.

14. Appareil de fabrication additive (30, 60), incluant
un ensemble optique qui inclut des composants optiques agencés le long d'un trajet optique d'un faisceau d'énergie produit par une source d'énergie entre la source d'énergie et une surface de travail pour diriger le faisceau d'énergie sur un lit de matériau, les composants optiques incluant au moins un composant optique réglable sous la forme d'au moins un télescope (92, 96), généralement un télescope zoom, et/ou d'au moins un miroir déformable (78), et un système de commande selon la revendication 1, le système de commande étant configuré pour commander ledit au moins un composant optique réglable de l'ensemble optique afin de compenser l'effet de lentille thermique.
